# EUROPEAN PATENT SPECIFICATION

(11) **EP 3 721 678 B1**
(45) Date of publication and mention of the grant of the patent: **24.01.2024**
(21) Application number: 18827249.6
(22) Date of filing: 04.12.2018
(51) Int. Cl.: H05B 3/00, H02M 1/14

(54) **OHMIC HEATER AND METHOD FOR OPERATING**
OHMSCHER HEIZER UND VERFAHREN ZUM BETRIEB
DISPOSITIF DE CHAUFFAGE OHMIQUE ET SON PROCÉDÉ DE FONCTIONNEMENT

(30) Priority: 04.12.2017 IT 201700139860
(43) Date of publication of application: 14.10.2020
(73) Proprietor: CFT S.p.A., 43122 Parma (IT)
(72) Inventor: CATELLI, Roberto, 43123 Parma (IT); COVA, Paolo, 43124 Parma (IT); ROMEI, Stefano, 43126 Parma (IT); SOLDATI, Alessandro, 43013 Langhirano (Parma) (IT); FRANCESCHINI, Giovanni, 43122 Reggio Nell'Emilia (IT); TOSCANI, Andrea, 43039 Salsomaggiore Terme (Parma) (IT)
(74) Representative: Monelli, Alberto
(86) International application number: PCT/IB2018/059609
(87) International publication number: WO 2019/111143

(56) References cited:
- EP-A2- 0 580 192
- WO-A1-93/04421
- US-A- 5 481 451
- US-A- 5 870 297
- US-A1- 2007 047 612

## Description

### Technical Field

The present invention refers to an ohmic heater. It can be used to heat a food product.

### Prior Art

Ohmic heaters are known comprising:
- a rectifier for rectifying three-phase supply voltage;
- capacitors that level the output voltage from the rectifier;
- an inverter which generates the desired waveform, located downstream of the capacitors;
- a transformer located downstream of the inverter that multiplies the voltage in order to adapt it to the different conductivity of the product to be heated;
- a bank of capacitors connected to each other in parallel and located upstream and in series to the transformer to protect it from overheating generated by a continuous component of the voltage (undesired, but unavoidable, consequence of the action of the inverter);
- a pair of electrodes intended to come into contact with the product to be heated.

A drawback of this solution is linked to the row of capacitors connected to each other in parallel and in series and located upstream to the transformer, which require a significant footprint and a substantial investment for their purchase and maintenance.

A similar drawback is linked to the fact that the capacitors that level the output voltage from the rectifier are bulky, considering the powers involved (typically around 50-100kW). Furthermore, electrolytic capacitors must be used, which have significant costs and above all could constitute a weak link in the reliability of the device (in terms of duration and required maintenance).

US 2007/047612 A1 discloses a method for operating an ohmic heater, comprising the steps of: rectifying an alternating supply voltage by means of a rectifier; regulating the closing time of switches being part of an inverter generating a wave of alternating voltage that determines the passage of an electric current between a pair of electrodes located downstream of the inverter, the passage of current between the pair of electrodes causing the passage of current in the product interposed between them, causing its heating by the Joule effect; and varying the amplitude of the wave by means of a transformer located downstream of the inverter and upstream of the pair of electrodes.

### Aim of the invention

In this context, the technical task underpinning the present invention is to provide an ohmic heater and operating method which obviate the drawbacks of the prior art as cited above.

In particular, an object of the present invention is to provide an ohmic heater which allows the optimization of costs and sizes.

The technical task set and the objects specified are substantially attained by a method, comprising the technical characteristics as set out in claim 1.

### Brief description of the drawings

Further characteristics and advantages of the present invention will become more apparent from the approximate and thus non-limiting description of a preferred, but not exclusive, embodiment of a heater, as illustrated in the accompanying drawings, in which:
- figure 1 shows a schematic view of a heater according to the present invention;
- figure 2 shows a voltage-time diagram indicating the waveform generated by the rectifier of the heater of figure 1;
- figure 3a shows a voltage-time diagram indicating the waveform generated by the inverter of the heater of figure 1 ;
- figure 3b shows a voltage-time diagram indicating the waveform generated by the transformer of the heater of figure 1;
- figure 4 shows the path of the current in a first operating mode of the inverter of figure 1;
- figure 5 shows the path of the current in a second operating mode of the inverter of figure 1.

### Detailed description of preferred embodiments of the invention

An ohmic heater is denoted in the appended figures by reference number 1. It is typically used to heat a food product.

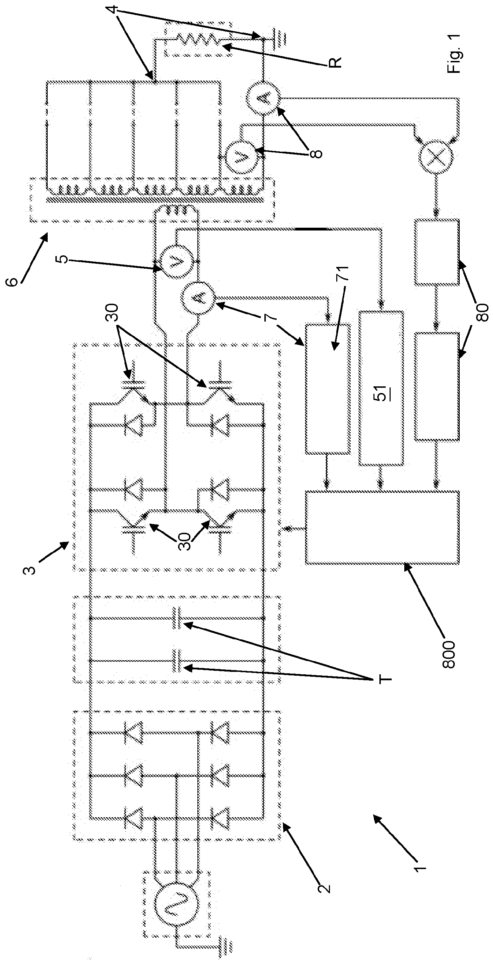

The ohmic heater 1 comprises a rectifier 2 of the supply voltage. It can for example comprise a diode bridge as shown in figure 1. More in detail in the solution of figure 1, the rectifier comprises 3 IXYS MDD 172/16 modules.

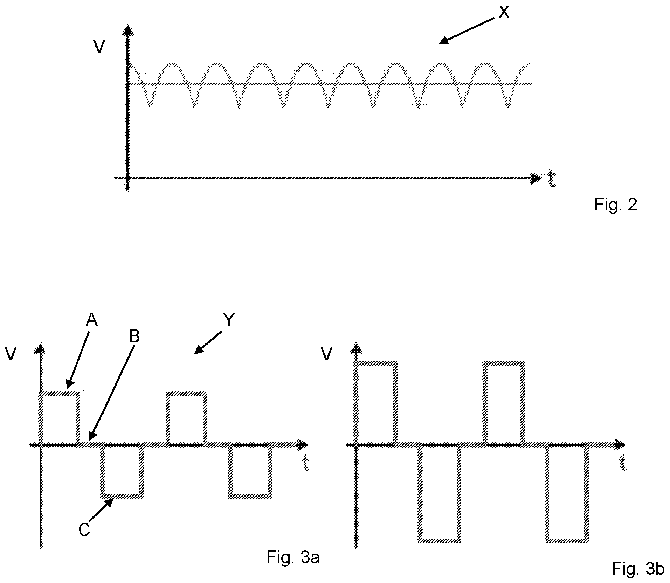

The supply voltage is alternating and the output voltage of the rectifier would ideally generate continuous voltage. In practice, for reasons relating to the structure of the rectifier 2, the voltage X that is generated is variable in time (see figure 2). A diagram that shows the time on the abscissa and the voltage on the ordinate draws many sinusoid arcs that are repeated identically. In the case of a three-phase diode bridge, the frequency of these arcs is equal to 300 Hz (if the supply voltage is equal to 50 Hz).

The heater 1 further comprises an inverter 3 in turn comprising controlled switches 30. The term controlled switches is used to indicate that it is possible to intervene on the time instants and intervals of opening/closing the switches 30 in order to obtain the desired alternating waveform Y downstream (see figure 3a). Throughout the present description, it should be noted that the term closed switch is intended as a switch that allows the passage of current. On the contrary, the term open switch is intended as a switch that prevents the passage of current.

In the preferred embodiment (see for example figure 1) the inverter 3 is an H-bridge inverter. The switches 30 of the inverter 3 define the switches 30 of the H-bridge 3.

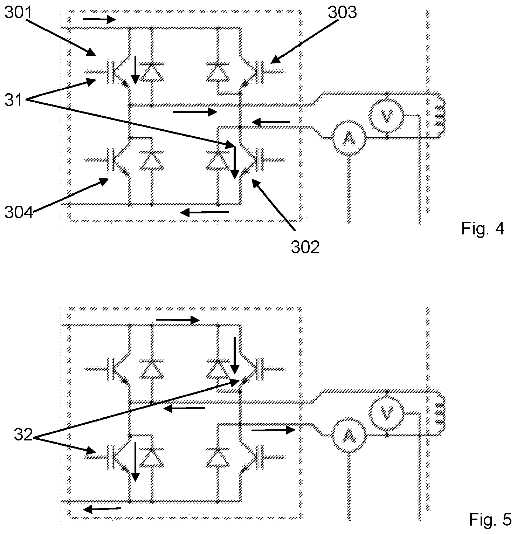

In particular, they define at least a first and a second pair 31, 32 of switches 30 which close alternately (causing the alternation of the first and second operating mode illustrated respectively in figure 4 and figure 5) generating an alternating wave Y downstream. The first pair 31 of switches 30 advantageously comprises a first and a second switch 301, 302. The second pair 32 of switches comprises a third and a fourth switch 303, 304. The first and third switch 301, 303 are the switches at the top of the H-bridge. They are also called "source" (or "high side switch") in the technical field. The second and fourth switch 302, 304 are the switches at the bottom of the H-bridge. They are also called "sink" (or low side switch) in the technical field.

Unless the heater 1 operates in conditions of maximum power between the first and second operating mode described above, a time interval is envisaged wherein the first and third switch 301, 303 or the second and fourth switch 302, 304 are closed. In figure 3a:
- the positive pulse indicated by reference letter A is associated with the closing of the first pair 31 of switches;
- the portion with null voltage indicated by reference letter B is associated with the closing of the first and third switches 301, 303 or the second and fourth switches 302, 304;
- the negative pulse indicated by reference letter C is associated with the closing of the second pair 32 of switches.

In the preferred embodiment, the inverter 3 is of the H-bridge IGBT type (Insulated Gate Bipolar Transistor), appropriately class 1200 V.

In the preferred embodiment the heater 1 comprises a pair 4 of electrodes which can be arranged in contact with the food product to be heated. The passage of current between the pair 4 of electrodes causes the passage of current in the product interposed between them, causing its heating by the Joule effect (this is the general peculiarity of ohmic heaters). The product that is heated has a fluid structure in which solid elements can also be dispersed.

The inverter 3 is operatively interposed between the rectifier 2 and the pair 4 of electrodes.

In a constructional solution shown in the appended figures, the heater 1 comprises means 5 for determining an oscillating voltage X generated by the rectifier 2. This is the voltage X which is located immediately downstream of the rectifier 2. It is the voltage that can be detected on the bus interposed between the rectifier 2 and inverter 3 (which is why it can also be defined bus voltage). The means 5 determines the voltage X shown in figure 2.

It can therefore measure the voltage X in a section between the rectifier 2 and the inverter 3. It could however also measure the voltage X in a section downstream of the inverter 3 from the moment that the envelope of the voltage-time wave Y downstream of the inverter 3 makes it however possible to determine (by means of the data processing system 51) the trend of the voltage X generated by the rectifier 2 (i.e. the voltage which is visible between the rectifier 2 and the inverter 3). The latter solution is that shown in figure 1.

In fact, the wave Y of alternating voltage generated by the inverter 3 has a frequency (in the preferred solution it assumes a value between 20000 and 40000 Hz, preferably 30000 Hz) that is at least 30 times greater than the frequency of said variable voltage X generated by the rectifier 2 (which is 300 Hz), as indicated previously.

The wave Y generated by the inverter 3 is substantially a square wave. It is bipolar.

The heater 1 further comprises a system 800 for regulating the closing duration of the switches 30 of the inverter 3.

Preferably but not necessarily, the system 800 for regulating can operate as a function of the corresponding voltage X determined at a given instant by the means 5 for determining an oscillating voltage X. The system 800 for regulating the closing duration of the switches of the inverter 3 makes it possible to regulate, instant-by-instant, the closing time of both the first and the second pair 31, 32 of switches 30. In particular the system 800 for regulating the closing duration of the switches 30 makes it possible to regulate the time instant wherein both the first and the second pair 31, 32 of switches open and the one in which they close.

The use of the means 5 for determining an oscillating voltage X is necessary in the absence of capacitors capable of levelling the output voltage X from the rectifier. The capacitors indicated with reference letter T in figure 1 make it possible to absorb sudden surges in voltage associated with the switching of the switches 30, but do not allow the levelling of the output voltage X from the rectifier 2.

The system 800 for regulating the closing duration of the switches 30:
- as the voltage X generated by the rectifier 2 and detected by the means 5 for determining an oscillating voltage X decreases; and
- with the other conditions being the same;
determines an increase in the duration of pulses (of non-null amplitude) in a wave Y of alternating voltage that determines the passage of an electric current between a pair 4 of electrodes located downstream of the inverter 3 and vice versa.

In particular, the system 800 determines an increase in the closing duration of the first and second pair 31, 32 of switches with a decrease in the voltage X generated by the rectifier 2 and detected by the detecting means 5. The system 800 for regulating the closing duration of the switches 30 similarly causes a reduction in the closing duration of the first and second pair 31, 32 of switches as the voltage X detected by the detecting means 5 increases. In other words, a perfectly levelled voltage X is not used in order to avoid large, expensive and delicate capacitors and therefore a pulse width modulation is performed on the voltage-time curve generated by the inverter 3 to compensate for the variability of the bus voltage X.

If the means 5 indicates that the bus voltage X (on the ordinate) increases, then the width of the pulse (on the abscissa) should be restricted and therefore the closing time of at least a part of the switches 30.

This occurs without changing the frequency of the wave Y of figure 3a. This is achieved by accordingly regulating the duration of the interval wherein all the switches 30 determine the space B at null voltage indicated in figure 3a.

If the means 5 indicate that the bus voltage X (on the ordinate) decreases, then the width of the pulse (on the abscissa) should increase and therefore the closing time of at least a part of the switches 30.

The regulation of the closing duration of the switches 30 therefore makes it possible to keep the delivered power constant in time as a function of the signal coming from the means 5 for determining an oscillating voltage X. This makes it possible to properly heat the product that passes between the pair 4 of electrodes.

In an alternative solution which is not illustrated, a large bank of capacitors could be present which is capable of levelling the voltage X generated by the rectifier 2. In this case the means 5 for determining an oscillating voltage X generated by the rectifier 2 could be superfluous.

The heater 1 comprises a transformer 6 located between the inverter 3 and the pair 4 of electrodes for regulating the amplitude of the voltage. This makes it possible to adapt the voltage as a function of the resistivity of the product to be heated. When the resistivity is low, it is necessary to amplify the voltage value more than when the resistivity of the product is low.

Characteristically, the heater 1 comprises means 7 for determining the continuous component of the current in a zone downstream of the inverter 3 and upstream or at the transformer 6. The means 7 for determining the continuous component as such is known and in the preferred embodiment comprises a Hall-effect current transducer. The means 7 for determining the continuous component comprises a data processing unit 71 that processes the measured current in order to be able to extract the value of the continuous component in a known manner. This continuous component is an undesired consequence of the fact that there may be minimal asymmetries in the components of the inverter 3 (due to the fact that this is a real device and not an ideal one). The transformer 6 is very sensitive to this continuous component, which even with small values is capable of damaging it. There are devices to minimize the sensitivity of the transformer 6 to such a continuous component, but they penalize efficiency and are therefore to be avoided.

On this point, the system 800 for (instant-by-instant) regulation of the closing duration of the switches 30 of said inverter 3 operates in order to minimize or best nullify the signal coming from the means 7 for determining the continuous component. The system can then act in feedback.

The system 800 for regulating the closing duration intervenes on the waveform Y and in particular intervenes instant-by-instant:
- on the width of the positive pulses of the waveform Y (which lie above the axis of abscissas); or
- on the width of the negative pulses of the waveform Y (which lie below the axis of abscissas).

In particular the system 800 for regulating the closing duration intervenes to modify the mean value of such wave Y.

The elimination of bulky capacitors makes it possible to considerably reduce the size of the heater 1.

In the preferred embodiment the rectifier 2, the inverter 3 and the transformer can be placed in a parallelepiped casing having the size 300x300x800 mm.

Advantageously the heater 1 comprises a cooling plate provided with a coil wherein a cooling fluid circulates. It allows the cooling of power electronic components. Preferably this cooling plate is made of aluminium. Appropriately the coil passes under the inverter 3 and the rectifier 2.

An operating method of an ohmic heater 1 also constitutes a subject matter of the present invention. It is advantageously implemented by an ohmic heater 1 having one or more of the characteristics described in the foregoing.

Usually the supply voltage will be alternating. It is therefore envisaged to rectify an alternating supply voltage by means of a rectifier 2. Advantageously the rectifier 2 is a three-phase diode type. It generates a variable voltage X in time (the bus voltage described above). As indicated above, a diagram that shows the time on the abscissa and the voltage X on the ordinate draws many sinusoid arcs that are repeated identically (with a frequency of 300 Hz if the supply voltage is 50 Hz). This diagram is illustrated in figure 2.

The method can further comprise the step of measuring said variable voltage X in time (generated by the rectifier 2; it is therefore the voltage which is located immediately downstream of the rectifier 2). In fact, if the voltage X is not levelled, it will be important to take account of such unevenness to still be able to exploit it in the best of ways. This is the preferred solution to which the accompanying figures refer.

The method comprises the step of regulating the closing time of the switches 30 forming part of an inverter 3. This can advantageously be used to compensate the oscillations of said variable voltage variable X (the bus voltage) in time. As previously explained, in the preferred embodiment this inverter 3 is an inverter 3 comprising an H-bridge.

A value lower than the variable voltage X (generated by the rectifier 2) is associated with a greater closing time of at least a part of the switches 30 generating a wave Y of alternating voltage.

This wave Y, possibly amplified at will, determines the passage of an electric current between at least one pair 4 of electrodes located downstream of the inverter 3. In this way the electric current passes through the product present between the electrodes 4, heating it by the Joule effect. The step of amplifying or reducing the amplitude of the voltage preferably takes place through a transformer 6 located downstream of the inverter 3 and upstream of the pair 4 of electrodes. The waveform Y of the alternating voltage generated by the inverter 3 has a frequency that is at least 30 times greater (preferably at least 90 times greater) than the frequency of said variable voltage X generated by the rectifier 2.

The step of regulating the closing time of the switches 30 envisages compensating for a reduction/increase in the variable voltage X delivered by the rectifier 2 (and measured by the means 5) respectively with a longer/shorter closing duration of a part of said switches 30. Because of the significant difference in frequency between the wave Y generated by the inverter 3 and that by the rectifier 2, during the time interval wherein a pair of switches remains closed, the voltage X generated by the rectifier 2 is not changed in a significant manner.

The step of regulating the closing time of the switches 30 envisages varying the area under the profile of said wave Y in a Cartesian diagram having voltage on the ordinate and time on the abscissa such that the power delivered by the ohmic heater 1 remains in line with what is desired. In the embodiment exemplified in figures 4 and 5 the diode inverter 3 comprises a first and a second pair 31, 32 of switches (transistor). The positive pulses of the voltage wave Y (see figure 3a) are associated with the closing of the first pair 31 of switches and the opening of the second pair 32 of switches (see figure 4). The negative pulses of the voltage wave Y are associated with the opening of the first pair 31 of switches and the closing of the second pair 32 of switches.

In an alternative embodiment not shown, the voltage X generated by the rectifier 2 could be levelled through the use of important capacitors located immediately downstream of the rectifier 2. In this case it is not necessary to control the closing of the switches 30 as a function of the variable voltage X immediately downstream of the rectifier 2 (bus voltage). In fact in this case, the bus voltage is constant and therefore such control is superfluous.

Characteristically the method comprises the step of determining the continuous component of the electric current entering the transformer 6.

In fact, the step of regulating the closing time of the switches 30 which are part of the inverter 3 advantageously takes place as a function of the continuous component of the determined electric current entering the transformer 6. The purpose of this control is in fact to suppress/reduce the continuous component. As previously explained, this continuous component is in fact deleterious to the transformer 6.

The step of suppressing/reducing the continuous component envisages regulating the closing time of the switches 30 in order to vary the width of a plurality of positive pulses or alternatively of a plurality of negative pulses of said wave Y of alternating voltage. By modifying the width of the positive pulses (without also modifying the width of the negative pulses or modifying it in the opposite direction), the average value of the wave Y changes. Similarly, it changes by modifying the width of the negative pulses (without also modifying the width of the positive pulses or modifying it in the opposite direction). This therefore provides compensation, suppressing or significantly reducing the continuous component entering the transformer 6.

Consequently if at the input of the transformer 6 a continuous component of the current is measured with a positive sign, the method envisages increasing the width of the negative pulses of the wave Y, while leaving unaltered the width of the positive pulses of the wave Y. Alternatively, it is possible to reduce the width of the positive pulses of the wave Y while leaving unaltered the width of the negative pulses of the wave Y.

Similarly if at the input of the transformer 6 a continuous component of the current is measured with a negative sign, the method envisages increasing the width of the positive pulses while leaving unaltered the width of the negative pulses of the wave Y. Alternatively it is possible to reduce the width of the negative pulses, leaving unaltered the width of the positive pulses.

The step of suppressing/reducing the continuous component envisages regulating the closing time of the switches 30 to modify the average value of the wave Y generated by the inverter 3 in order to compensate the continuous component of the measured current entering the transformer 6. The frequency with which such modification takes place is preferably comprised between 20000 Hz and 40000 Hz.

The modification of the width of these pulses is regardless contained, and therefore does not generate variations which can significantly alter the overall power delivered by the heater 1.

A further control, which however is much slower compared to the control of the continuous component and the (optional) control of the variation of the bus voltage X, is linked to the power of the heater 1. In order to monitor the power, the method envisages measuring the current and the voltage on the load (on the pair of electrodes 4). In figure 1 this measurement is performed by the sensors indicated by reference number 8. This data is then filtered and processed by the means 80.

Depending on the power required, the method then envisages widening the width of the positive and negative pulses. The regulation resulting from the control of the continuous component, and if present, also that of the bus voltage, is added to this first regulation. In this respect the control of the continuous component of the electric current entering the transformer 6 will determine a coefficient which will have to be multiplied by the width of the pulses required by the power so as to correct the actual width of the pulses. The control of the amplitude of the pulses related to the variability of the bus voltage is similar.

The present invention achieves important advantages.

Firstly, it makes it possible to avoid the use of large capacitors which have significant purchase and maintenance costs. Furthermore, they have a significant footprint that is reflected on the dimensions of the heater 1. The invention as it is conceived is susceptible to numerous modifications and variations, all falling within the scope of the inventive concept characterising it. Furthermore, all the details can be replaced with other technically-equivalent elements. In practice, all the materials used, as well as the dimensions, can be any according to requirements.

## Claims

1. A method for operating an ohmic heater for heating a food product, comprising the steps of:
- rectifying an alternating supply voltage by means of a rectifier (2);
- regulating the closing time of switches (30) being part of an inverter (3) generating a wave (Y) of alternating voltage that determines the passage of an electric current between a pair (4) of electrodes located downstream of the inverter (3), the passage of current between the pair (4) of electrodes causing the passage of current in the product interposed between them, causing its heating by the Joule effect; and
- varying the amplitude of the wave (Y) by means of a transformer (6) located downstream of the inverter (3) and upstream of the pair (4) of electrodes; determining the continuous component of the electric current entering the transformer (6);
the step of regulating the closing time of the switches (30) being part of the inverter (3) taking place as a function of the continuous component of the electric current entering the transformer (6) so as to suppress/reduce such continuous component with a step of suppressing/reducing the continuous component;
the step of suppressing/reducing the continuous component comprises regulating the closing time of the switches (30) in order to vary the width of a plurality of positive pulses or alternatively of a plurality of negative pulses of said wave (Y) of alternating voltage;
wherein the average value of the wave (Y) changes:
i) by modifying the width of the positive pulses, without also modifying the width of the negative pulses; or
ii) by modifying the width of the negative pulses, without also modifying the width of the positive pulses.

2. The method according to claim 1 **characterised by**:
- increasing the width of the negative pulses of the wave (Y) while leaving unaltered the width of the positive pulses of the wave (Y); or
- reducing the width of the positive pulses of the wave (Y) while leaving unaltered the width of the negative pulses of the wave (Y);
if at the inlet to the transformer (6) a continuous component of the current with a positive sign is noted.

3. The method according to claim 1 or 2, **characterised by**:
- increasing the width of the positive pulses of the wave (Y) while leaving unaltered the width of the negative pulses of the wave (Y);
- reducing the width of the negative pulses of the wave (Y) while leaving unaltered the width of the positive pulses of the wave (Y);
if at the inlet to the transformer (6) a continuous component of the current with a negative sign is noted.

4. The method according to any one of the preceding claims, **characterised in that** said rectifier (2) generates a voltage that is variable over time; the wave (Y) of alternating voltage generated by the inverter (3) has a frequency that is at least 30 times higher than the frequency of a variable voltage (X) generated by the rectifier (2).

5. The method according to claim 4, **characterised in that** it comprises a step of measuring said variable voltage (X) over time; the step of regulating the closing time of the switches (30) being part of the inverter (3) comprises the step of compensating over time for the oscillations of said variable voltage (X), a longer closing time of at least a part of the switches (30) being associated with a lower variable voltage (X) value.

6. The method according to claim 5, **characterised in that** the step of regulating the closing time of the switches (30) envisages compensating for a reduction/increase in variable voltage (X) measured with a longer/shorter duration, respectively, of the closing of a part of said switches (30).

7. The method according to any of the previous claims, **characterised in that** the step of determining the continuous component of the electric current entering the transformer (6) uses a Hall-effect current transducer.

## Patentansprüche

1. Verfahren zum Betreiben eines ohmschen Heizers zum Erhitzen eines Lebensmittelprodukts, umfassend die Schritte:
- Gleichrichten einer Versorgungswechselspannung mittels eines Gleichrichters (2);
- Regeln der Schließzeit von Schaltern (30), die Teil eines Wechselrichters (3) sind, der eine Wechselspannungswelle (Y) erzeugt, die den Durchgang eines elektrischen Stroms zwischen einem Paar (4) von Elektroden bewirkt, die stromabwärts des Wechselrichters (3) angeordnet sind, wobei der Stromdurchgang zwischen dem Paar (4) von Elektroden den Durchgang von Strom in dem zwischen ihnen angeordneten Produkt verursacht, was dessen Erwärmung durch den Joule-Effekt verursacht; und
- Variieren der Amplitude der Welle (Y) mittels eines Transformators (6), der stromabwärts des Wechselrichters (3) und stromaufwärts des Elektrodenpaares (4) angeordnet ist;
Bestimmen der kontinuierlichen Komponente des elektrischen Stroms, der in den Transformator (6) eintritt;
wobei der Schritt zum Regulieren der Schließzeit der Schalter (30), die Teil des Wechselrichters (3) sind, auch als Funktion der kontinuierlichen Komponente des in den Transformator (6) eintretenden elektrischen Stroms stattfindet, um diese kontinuierliche Komponente mit einem Schritt zum Unterdrücken/Reduzieren der kontinuierlichen Komponente zu unterdrücken/zu reduzieren;
der Schritt zum Unterdrücken/Reduzieren der kontinuierlichen Komponente umfasst das Regulieren der Schließzeit der Schalter (30), um die Breite einer Vielzahl von positiven Impulsen oder alternativ einer Vielzahl von negativen Impulsen der Wechselspannungswelle (Y) zu variieren;
wobei sich der Durchschnittswert der Welle (Y) ändert sich:
i) durch Modifizieren der Breite der positiven Impulse, ohne auch die Breite der negativen Impulse zu modifizieren; oder
ii) durch Modifizieren der Breite der negativen Impulse, ohne auch die Breite der positiven Impulse zu modifizieren.

2. Verfahren nach Anspruch 1, **gekennzeichnet durch**:
- Erhöhen der Breite der negativen Impulse der Welle (Y), während die Breite der positiven Impulse der Welle (Y) unverändert bleibt; oder
- Reduzieren der Breite der positiven Impulse der Welle (Y), während die Breite der negativen Impulse der Welle (Y) unverändert bleibt;
wenn am Eingang des Transformators (6) eine kontinuierliche Komponente des Stroms mit positivem Vorzeichen festgestellt wird.

3. Verfahren nach Anspruch 1 oder 2, **gekennzeichnet durch**:
- Erhöhen der Breite der positiven Impulse der Welle (Y), während die Breite der negativen Impulse der Welle (Y) unverändert bleibt;
- Reduzieren der Breite der negativen Impulse der Welle (Y), während die Breite der positiven Impulse der Welle (Y) unverändert bleibt;
wenn am Eingang des Transformators (6) eine kontinuierliche Komponente des Stroms mit negativem Vorzeichen festgestellt wird.

4. Verfahren nach einem der vorhergehenden Ansprüche, **dadurch gekennzeichnet, dass** der Gleichrichter (2) eine zeitlich veränderliche Spannung erzeugt; die vom Wechselrichter (3) erzeugte Wechselspannungswelle (Y) eine Frequenz aufweist, die mindestens 30 mal höher ist als die Frequenz einer vom Gleichrichter (2) erzeugten veränderlichen Spannung (X).

5. Verfahren nach Anspruch 4, **dadurch gekennzeichnet, dass** es einen Schritt zum Messen der veränderlichen Spannung (X) über der Zeit umfasst; wobei der Schritt zum Regulieren der Schließzeit der Schalter (30), die Teil des Wechselrichters (3) sind, den Schritt zum Kompensieren über der Zeit für die Schwingungen der veränderlichen Spannung (X) umfasst, wobei eine längere Schließzeit von mindestens einem Teil der Schalter (30) mit einem niedrigeren veränderlichen Spannungswert (X) assoziiert ist.

6. Verfahren nach Anspruch 5, **dadurch gekennzeichnet, dass** der Schritt zum Regulieren der Schließzeit der Schalter (30) vorsieht, dass ein(e) Reduzierung/Anstieg der variablen Spannung (X), die mit einer längeren bzw. kürzeren Dauer des Schließens von einem Teil der Schalter (30) gemessen wird, kompensiert wird.

7. Verfahren nach einem der vorhergehenden Ansprüche, **dadurch gekennzeichnet, dass** der Schritt zum Bestimmen der kontinuierlichen Komponente des in den Transformator (6) eintretenden elektrischen Stroms einen Hall-Stromwandler verwendet.

## Revendications

1. Procédé de fonctionnement d'un dispositif de chauffage ohmique pour chauffer un produit alimentaire, comprenant les étapes suivantes:
- rectifier une tension d'alimentation alternative au moyen d'un redresseur (2);
- régler le temps de fermeture des interrupteurs (30) faisant partie d'un onduleur (3) générant une onde (Y) de tension alternative qui détermine le passage d'un courant électrique entre une paire (4) d'électrodes situées en aval de l'onduleur (3), le passage du courant entre la paire (4) d'électrodes provoquant le passage du courant dans le produit interposé entre elles, provoquant son échauffement par effet Joule; et
- varier l'amplitude de l'onde (Y) au moyen d'un transformateur (6) situé en aval de l'onduleur (3) et en amont de la paire (4) d'électrodes;
déterminer la composante continue du courant électrique entrant dans le transformateur (6);
l'étape consistant à régler le temps de fermeture des interrupteurs (30) faisant partie de l'onduleur (3) ayant lieu en fonction de la composante continue du courant électrique entrant dans le transformateur (6) de manière à supprimer/réduire une telle composante continue avec une étape consistant à supprimer/réduire la composante continue;
l'étape de suppression/réduction de la composante continue comprend le réglage du temps de fermeture des interrupteurs (30) afin de varier la largeur d'une pluralité d'impulsions positives ou alternativement d'une pluralité d'impulsions négatives de ladite onde (Y) de tension alternative;
dans lequel la valeur moyenne de l'onde (Y) change:
i) en modifiant la largeur des impulsions positives, sans modifier également la largeur des impulsions négatives; ou
ii) en modifiant la largeur des impulsions négatives, sans modifier également la largeur des impulsions positives.

2. Procédé selon la revendication 1, **caractérisé par**:
- augmenter la largeur des impulsions négatives de l'onde (Y) tout en laissant inchangée la largeur des impulsions positives de l'onde (Y); ou
- réduire la largeur des impulsions positives de l'onde (Y) tout en laissant inchangée la largeur des impulsions négatives de l'onde (Y);
si, à l'entrée du transformateur (6), il est observé une composante continue du courant avec un signe positif.

3. Procédé selon la revendication 1 ou 2, **caractérisé par**:
- augmenter la largeur des impulsions positives de l'onde (Y) tout en laissant inchangée la largeur des impulsions négatives de l'onde (Y);
- réduire la largeur des impulsions négatives de l'onde (Y) tout en laissant inchangée la largeur des impulsions positives de l'onde (Y);
si, à l'entrée du transformateur (6), il est observé une composante continue du courant avec un signe négatif.

4. Procédé selon l'une quelconque des revendications précédentes, **caractérisé en ce que** ledit redresseur (2) génère une tension variable dans le temps; l'onde (Y) de tension alternative générée par l'onduleur (3) a une fréquence au moins 30 fois supérieure à la fréquence d'une tension variable (X) générée par le redresseur (2) .

5. Procédé selon la revendication 4, **caractérisé en ce qu'**il comprend une étape de mesure de ladite tension variable (X) dans le temps ; l'étape de réglage du temps de fermeture des interrupteurs (30) faisant partie de l'onduleur (3) comprend l'étape de compensation dans le temps des oscillations de ladite tension variable (X), un temps de fermeture plus long d'au moins une partie des interrupteurs (30) étant associé à une valeur de tension variable (X) plus faible.

6. Procédé selon la revendication 5, **caractérisé en ce que** l'étape de réglage du temps de fermeture des interrupteurs (30) envisage de compenser une réduction/augmentation de la tension variable (X) mesurée avec une durée plus longue/plus courte, respectivement, de la fermeture d'une partie desdits interrupteurs (30).

7. Procédé selon l'une quelconque des revendications précédentes, **caractérisé en ce que** l'étape de détermination de la composante continue du courant électrique entrant dans le transformateur (6) utilise un capteur à courants à effet Hall.
